Europäisches Patentamt

European Patent Office

Office européen des brevets

(19)

(11) EP 0 712 505 B1

(12) EUROPÄISCHE PATENTSCHRIFT

(45) Veröffentlichungstag und Bekanntmachung des
Hinweises auf die Patenterteilung:
29.04.1998 Patentblatt 1998/18

(21) Anmeldenummer: 94922827.4

(22) Anmeldetag: 27.07.1994

(51) Int Cl.⁶: G02F 1/29, G02F 1/295,
G02B 6/12

(86) Internationale Anmeldenummer:
PCT/DE94/00889

(87) Internationale Veröffentlichungsnummer:
WO 95/04951 (16.02.1995 Gazette 1995/08)

(54) **PLANARER ELEKTRO-OPTISCHER LICHTSTRAHLABLENKER UND VERFAHREN ZU SEINER HERSTELLUNG**

PLANAR ELECTRO-OPTICAL LIGHT BEAM DEFLECTOR AND PROCESS FOR PRODUCING THE SAME

DEFLECTEUR ELECTRO-OPTIQUE PLANAIRE DE FAISCEAU DE LUMIERE ET SON PROCEDE DE FABRICATION

(84) Benannte Vertragsstaaten:
AT BE CH DE DK ES FR GB GR IE IT LI LU MC NL
PT SE

(30) Priorität: 04.08.1993 DE 4326196

(43) Veröffentlichungstag der Anmeldung:
22.05.1996 Patentblatt 1996/21

(73) Patentinhaber: FRAUNHOFER-GESELLSCHAFT
ZUR FÖRDERUNG DER
ANGEWANDTEN FORSCHUNG E.V.
80636 München (DE)

(72) Erfinder: HINKOV, Vladimir,Dr.
D-79199 Kirchzarten (DE)

(56) Entgegenhaltungen:
DE-A- 3 025 096          FR-A- 2 684 772
US-A- 5 093 874          US-A- 5 317 446

• SOVIET JOURNAL OF QUANTUM
ELECTRONICS, Bd. 16, Nr. 12, Dezember 1986,
New York US, Seiten 1678-1679; A.A.
BLISTANOV et al.: 'Modulation and conversion
of light in lithium niobate crystals with a regular
domain structure'
• ELECTRONICS LETTERS, Bd. 27, Nr. 14, 4. Juli
1991, Stevenage GB, Seiten 1221-1222; H. ITO et
al.: 'Fabrication of periodic domain grating in
liNbO3 by electron beam writing for application
of nonlinear optical processes'

## Beschreibung

Die Erfindung betrifft einen planaren elektro-optischen Lichtstrahlablenker mit einer Zeile von nebeneinander angeordneten Prismenablenkern, die mit einer elektrischen Spannung beaufschlagbare Elektroden aufweisen.

Die Erfindung bezieht sich ferner auf ein Verfahren zur Herstellung eines solchen Lichtstrahlablenkers.

Elektronisch gesteuerte Lichtstrahlablenker, sogenannte Deflektoren, finden beispielsweise bei optischen Speichern oder Laser-TV-Displays u.dgl. Anwendung. Eine wichtige Eigenschaft eines solchen Deflektors ist die erreichbare Anzahl auflösbarer Punkte, d.h. einzelner im Winkel beabstandeter Lichtstrahlpositionen, die erzeugt werden können. Es ist bekannt, einen Deflektor mit Hilfe eines Prismas zu realisieren, dessen Brechzahl elektro-optisch änderbar ist. Mit einem einzigen derartigen Prisma lassen sich jedoch nur etwa 10 bis 20 auflösbare Punkte erzeugen. Dies reicht für die meisten Anwendungen nicht aus. So sind beispielsweise für die Anwendung in einem Laser-TV-Display etwa 1000 auflösbare Punkte erforderlich. Die Möglichkeit, mehrere Prismen hintereinander anzuordnen, um die Zahl der auflösbaren Punkte zu erhöhen, geht mit dem Nachteil einher, daß ein derart zusammengesetzter Deflektor über eine vergleichsweise große Baulänge verfügen würde. Diesen Nachteil weisen Lichtstrahlablenker mit einer Zeile nebeneinander angeordneter Prismen nicht auf. Dabei lenkt jedes Prisma einen Teil des Lichtstrahles ab, und zwar so, daß nach dem Deflektor der gesamte Strahl in die gewünschte Richtung läuft. Um eine destruktive Interferenz der partiell abgelenkten Teilstrahlen im Fernfeld zu vermeiden, ist es auch bekannt, die Phase jedes partiellen Strahles elektro-optisch zu steuern. Hierzu dient ein Satz von Steuerelektroden, die jeweils vor den die prismenförmigen Ablenkbereiche bildenden keilförmig angeordneten Prismenelektroden positioniert sind (DE 30 25 096 A1).

Elektro-optische Lichtstrahlablenker mit nebeneinander, d.h. in Form eines Prismen-Arrays angeordneten Ablenkprismen sind sowohl mit sogenannten Volumen-Prismen (Yuichi Ninomiya, Ultrahigh Resolving Electrooptic Prism Array Light Deflectors, IEEE Journal of Quantum Electronics, Vol. QE-9, No.8, Aug. 1973, p. 791 - 795) als auch mit integriert-optischen Wellenleiter-Prismen (DE 30 25 096 A1) realisiert worden. Hauptproblem bei den Prismenarray-Deflektoren ist die Erzeugung eines idealen Sägezahnverlaufes der Brechzahländerung ohne Abrundungen an den Prismenecken und ohne Verzerrungen zwischen den Prismen, denn jede Abweichung von einem idealen Verlauf führt zu verstärkten Seitenbändern und verschlechtert das Signal-Rausch-Verhältnis.

Mit Volumen-Prismen ist es praktisch unmöglich, einen idealen Sägezahnverlauf zu erzielen. Abgesehen davon, daß es technologisch sehr aufwendig ist, einen solchen Deflektor aus einzelnen Kristallplatten zusammenzusetzen, um scharfe Grenzen zwischen wenigstens einigen der Prismen zu erreichen, ist die Dicke der Platten, durch die der Lichtstrahl läuft, technologisch bedingt verhältnismäßig groß und beträgt mindestens 200 µm. Dies hat zur Folge, daß in einer derartigen Platte die elektrische Feldverteilung sehr inhomogen ist. Als Konsequenz weist die Brechzahlverteilung große Abweichungen vom gewünschten idealen Verlauf auf. In der Mitte der Platte sind diese Abweichungen am größten, in der Nähe der Elektroden hingegen ist mit kleineren Abweichungen zu rechnen. Ein weiterer Nachteil, der durch die Dicke der Platte verursacht wird, ist die bei ca. 1 KV liegende hohe Steuerspannung, mit der gearbeitet werden muß, wenn eine annehmbare Anzahl von auflösbaren Punkten erreicht werden soll.

Die Lösung mit Wellenleiter-Prismen hat gegenüber derjenigen mit Volumen-Prismen den Vorteil, daß das Licht in einer dünnen Schicht geführt wird, wodurch die Größe der an den Elektroden liegenden Steuerspannung reduziert werden kann. Wegen der ungünstigen Elektrodengeometrie beträgt diese jedoch immer noch 400 bis 500 V. Auch diese Lösung bietet nicht die Möglichkeit, eine ideale, sägezahnförmige Verteilung der Brechzahländerung zu erreichen. Grund hierfür ist die stark inhomogene elektrische Feldverteilung zwischen den auf der Oberfläche des Wellenleiters aufgetragenen Elektroden, die wiederum Verzerrungen im abgelenkten Lichtstrahl bedingen. Die ungünstige Elektrodenform begrenzt auch die Prismenabmessungen. Damit die Steuerspannung nicht übermäßig groß gewählt werden muß, werden die Prismen mit einer Breite von nur etwa 50 µm ausgelegt. Um etwa 1000 auflösbare Punkte zu erreichen, ist eine Apertur von 1 cm notwendig, d.h. es werden etwa 200 Prismen und genau so viele Steuerspannungen benötigt, was in nachteiliger Weise mit der hierfür erforderlichen vergleichsweise großen Komplexität der Steuerelektronik einhergeht.

Es ist daher Aufgabe der Erfindung, einen planaren elektro-optischen Lichtstrahlablenker der eingangs genannten Art zu schaffen, bei dem die vorgenannten Nachteile vermieden sind und bei dem insbesondere die Brechzahlverteilung einen nahezu idealen sägezahnförmigen Verlauf aufweist. Der Erfindung liegt darüber hinaus die Aufgabe zugrunde, ein möglichst wenig aufwendiges Verfahren zur Herstellung eines solchen Lichtstrahlablenkers anzugeben.

Die vorgenannte Aufgabe wird mit einem planaren elektro-optischen Lichtstrahlablenker wie er im Anspruch 1 definiert ist erfindungsgemäß gelöst. Der erfindungsgemäße Lichtstrahlablenker besteht aus einem plattenförmigen Z-Schnitt-Lithiumniobat- oder Lithiumtantalatkristall, in dem der Lichtstrahl geführt ist, und die Prismenablenker aus jeweils zwei ein dreiseitiges Prisma bildenden Bereichen, in denen durch Inversion der durch den E-Feld-Vektor bestimmten Polarisationsrichtung in Domänen mit ursprünglich in +Z-Achsenrichtung vorliegender spontaner Polarisationsrichtung eine weitgehend einheitliche Polarisationsrichtung erzeugt ist, wobei jeweils benachbarte prismenförmige Bereiche eine entgegengesetzte Polarisationsrichtung aufweisen, und wobei auf dem Kristall auf diesen prismenförmigen Bereichen eine rechteckförmig ausgebildete Elektrode aufgebracht ist und der Kristall an seiner Unterseite mit zumindest einer Gegenelektrode versehen ist.

Vorteilhafte Weiterbildungen des erfindungsgemäßen planaren elektro - optischen Lichtstrahlablenkers sind Gegenstand der Unteransprüche 2 bis 12.

Die des weiteren der Erfindung zugrunde liegende Aufgabe wird mit einem Verfahren wie es in Anspruch 13 angegeben ist erfindungsgemäß gelöst.

Beim erfindungsgemäßen Verfahren wird zunächst in einem plattenförmigen Z-Schnitt-Lithiumniobat- oder Lithiumtantalat-Kristall eine Prismenstruktur erzeugt, indem zumindest in der Nähe der Oberfläche (Oberseite) innerhalb jeweils ein dreiseitiges Prisma bildenden Bereichen durch Inversion der Polarisationsrichtung in Domänen mit in +Z-Achsenrichtung vorliegender spontaner Polarisationsrichtung eine weitgehend einheitliche Polarisationsrichtung erzeugt wird, wobei benachbarte prismenförmige Bereiche eine entgegengesetzte Polarisationsrichtung aufweisen, danach wird auf dem Kristall auf diesen nebeneinander angeordneten prismenförmigen Bereichen eine rechteckförmige Elektrode aufgebracht und der Kristall auf seiner Unterseite mit zumindest einer Gegenelektrode versehen.

Vorzugsweise Ausführungsformen des erfindungsgemäßen Verfahrens sind in den Unteransprüchen 14 bis 21 angegeben.

Die Erfindung nutzt die Tatsache aus, daß es möglich ist, zumindest in der Nähe der Kristalloberfläche aber auch durch die gesamte Dicke der Kristallplatte hindurch in einigen Kristallbereichen durch Inversion der durch den E-Feld-Vektor $\vec{E}_S$ bestimmten Polarisationsrichtung in Domänen mit ursprünglich entgegengesetzt vorliegender spontaner Polarisationsrichtung eine weitgehend einheitliche Polarisationsrichtung zu erzeugen. Dies gelingt z.B. auf einem +Z-Schnitt-Lithiumniobatkristall (eine Inversion ist aber auch auf einem -Z-Schnitt-Lithiumniobatkristall möglich) durch das Auftragen einer Titan-Schicht und anschließendes Aufheizen auf über 1000°C. Die Bereiche, in denen eine weitgehend einheitliche Polarisationsrichtung erzeugt werden soll, können dabei photolithographisch sehr genau auf der Kristalloberseite als Dreiecke und damit von der Kristalloberseite in die Tiefe reichende dreiseitige Prismen mit scharfen Kanten und Ecken ausgebildet werden. Wird dafür Sorge getragen, daß jeweils benachbarte prismenförmige Bereiche eine entgegengesetzte Polarisationsrichtung aufweisen, so kann durch Anlegen einer elektrischen Spannung an eine entsprechend diesen Bereichen zugeordnete gemeinsame rechteckförmige Elektrode in den benachbarten prismenförmigen Bereichen eine Brechzahländerung mit unterschiedlichen Vorzeichen (n + Δn bzw. n -Δn) induziert werden. Die Brechzahlverteilung ist in diesem Fall nahezu ideal sägezahnförmig.

Die Erfindung wird nachstehend anhand von Beispielen und zugehörigen Zeichnungen näher erläutert. In den Zeichnungen zeigen jeweils schematisch

Figur 1     den Durchgang eines Lichtstrahles durch ein einzelnes Prisma, dessen Brechzahl elektro-optisch von n auf n + Δn änderbar ist,

Figur 2     den Durchgang des Lichtstrahles durch eine Vielzahl von nebeneinander angeordneten Prismenablenkern,

Figur 3     den Durchgang des Lichtstrahles durch eine Vielzahl von nebeneinander angeordneten Prismenablenkern, wobei den Prismenablenkern jeweils Steuerelektroden zur Steuerung der Phase der Partialstrahlen zugeordnet sind,

Figur 4     einen bekannten, aus einzelnen Kristallplatten zusammengesetzten elektro-optischen Lichtstrahlablenker,

Figur 5     einen bekannten elektro-optischen Lichtstrahlablenker, bei dem das Licht in einem Schichtwellenleiter geführt wird,

Figur 6a bis d     einzelne Verfahrensschritte zur Herstellung eines erfindungsgemäßen Lichtstrahlablenkers,

Figur 7a bis e     eine weitere Möglichkeit zur Herstellung eines erfindungsgemäßen Lichtstrahlablenkers,

Figur 8a     einen Querschnitt durch den Lichtstrahlablenker gem. Figur 6d,

Figur 8b     einen Querschnitt durch den Lichtstrahlablenker gem. Figur 7e,

Figur 9     einen erfindungsgemäßen Lichtstrahlablenker mit weiteren integriert-optischen Elementen auf einem Lithiumniobatkristall als Substratkörper, wobei das Licht in einem Schichtwellenleiter geführt wird,

Figur 10     den Lichtstrahlablenker gem. Figur 9, jedoch mit einem besonders strukturierten Streifenwellenleiter, über den das Licht in den Schichtwellenleiter eingekoppelt wird,

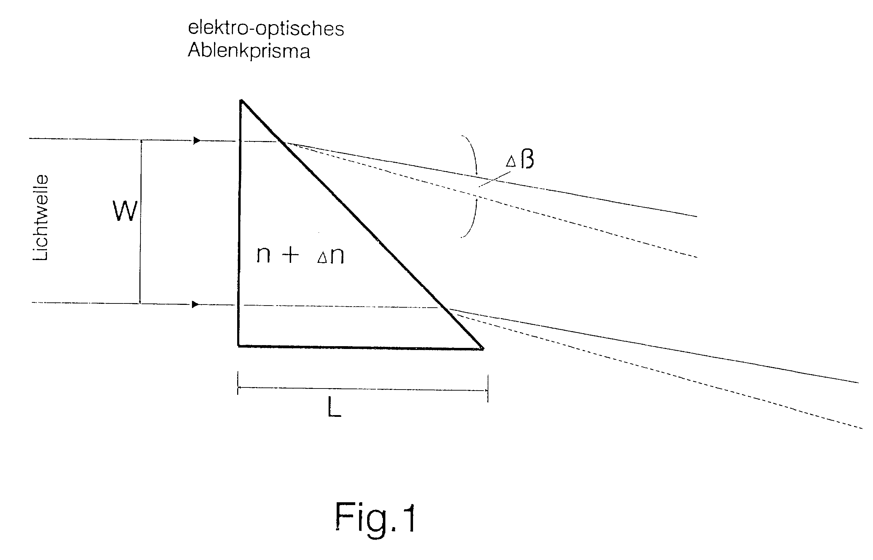

Figur 1 1    einen Lichtstrahlablenker mit einer ersten Zeile nebeneinander angeordneter Prismenablenker und einer in Lichtausbreitungsrichtung dahinter plazierten zweiten Zeile nebeneinander angeordneter Prismenablenker, sowie

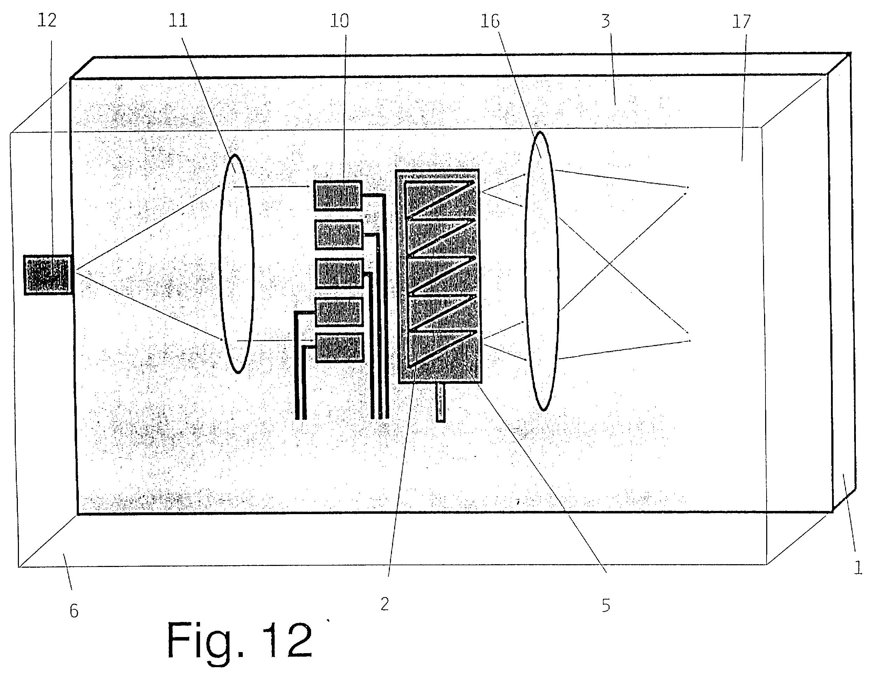

Figur 12    einen erfindungsgemäßen Lichtstrahlablenker, der als integriert-optischer Lichtschalter eingesetzt werden kann.

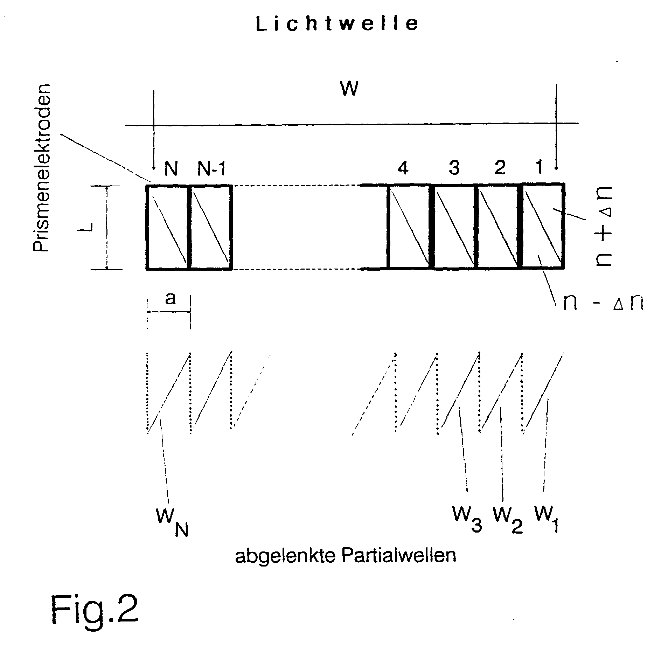

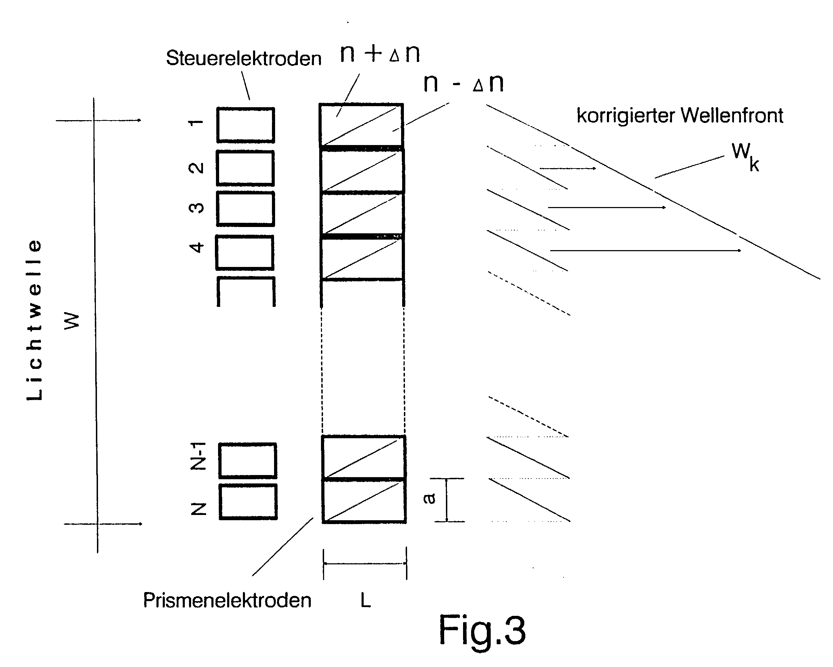

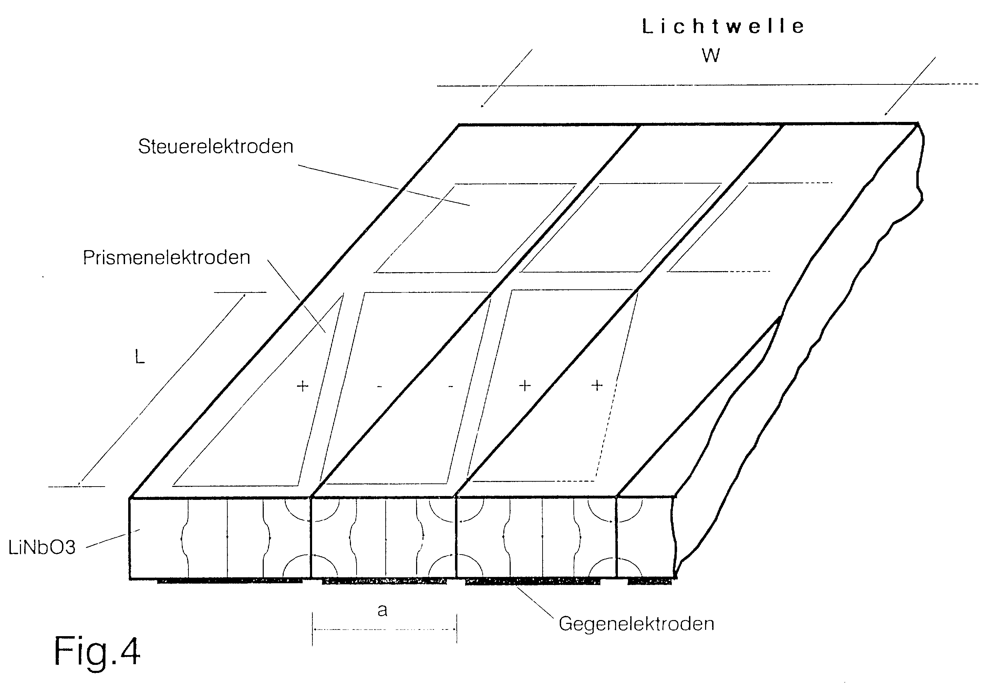

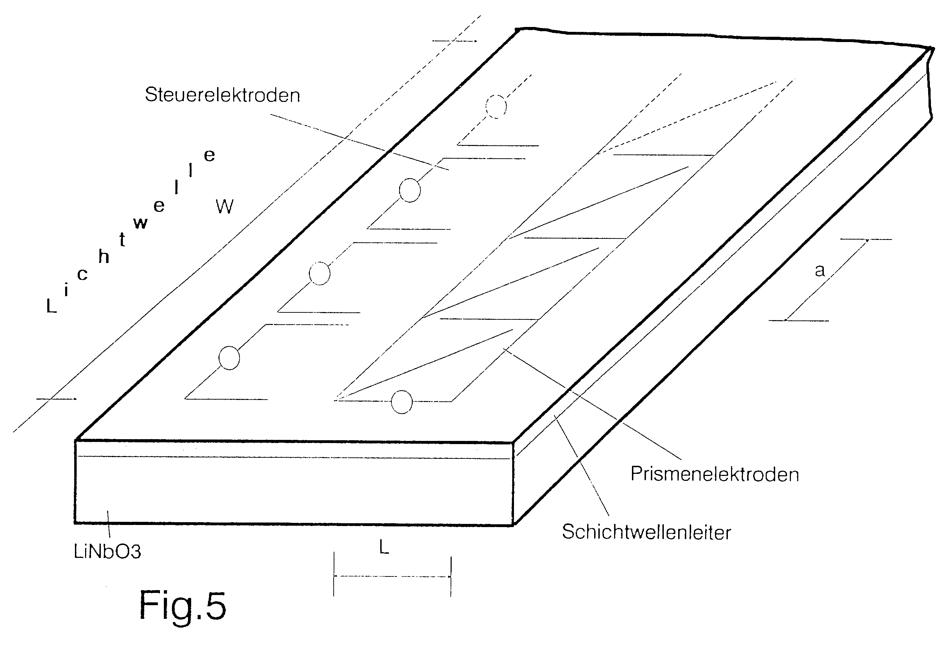

In Figur 1 ist ein einzelnes Prisma dargestellt, dessen Brechzahl n elektro-optisch veränderbar ist. W bezeichnet eine Wellenfront eines auf dieses Prisma einfallenden Lichtstrahles. In Abhängigkeit von der Brechzahl n wird dieser Lichtstrahl beim Verlassen des Prismas gebrochen. Wird nun die Brechzahl elektro-optisch von n auf n + $\Delta$n geändert, so wird sich der Brechungswinkel um $\Delta\beta$ verändern. Da mit Hilfe eines solchen einzelnen Prismas durch elektro-optische Änderung der Brechzahl und damit der Winkelposition eines gebrochenen Lichtstrahles lediglich etwa 10 bis 20 auflösbare Punkte erzeugt werden können, ist es - wie vorstehend bereits erläutert - bekannt, zum Zwecke einer größeren Auflösung mehrere Prismen nebeneinander in Form eines Prismen-Arrays anzuordnen. Figur 2 zeigt eine derartige Anordnung mit N nebeneinander plazierten Prismenablenkern im Schema. Jedes dieser N gleichartigen Prismen mit der Basislänge L und einer Breite a lenkt einen Teil des mit der Wellenfront W einfallenden Lichtstrahles ab. $W_1$ bis $W_N$ bezeichnen die Wellenfronten der jeweils partiell abgelenkten Teilstrahlen. In Figur 3 ist eine nämliche Anordnung wie in Figur 2 dargestellt, nur daß hier vor den die prismenförmigen Ablenkbereiche und damit einzelne Prismenablenker bildenden keilförmig angeordneten Prismenelektroden eine der Anzahl der Prismenablenker gleiche Anzahl N Steuerelektroden angeordnet ist. Mit Hilfe dieser Steuerelektroden kann die Phase eines jeden Teilstrahles elektro-optisch gesteuert werden, wodurch die ansonsten im Fernfeld des abgelenkten Strahles auftretenden destruktiven Interferenzen vermieden werden. $W_K$ bezeichnet die auf diese Weise korrigierte Wellenfront des abgelenkten Lichtstrahles. Figur 4 zeigt eine bekannte Realisierungsform eines derartigen, eine Zeile nebeneinander angeordnete Prismenablenker und zugeordnete Steuerelektroden aufweisenden Lichtstrahlablenkers. Dieser bekannte Lichtstrahlablenker ist aus einzelnen Lithiumniobatkristallplatten zusammengesetzt. Jede dieser Kristallplatten trägt auf ihrer Oberseite ein Paar keil- bzw. dreieckförmige Prismenelektroden und eine vorgelagerte Steuerelektrode. Auf der Unterseite einer jeden Kristallplatte sind entsprechende Gegenelektroden aufgebracht. Werden die Prismenelektroden mit einer entsprechenden elektrischen Spannung beaufschlagt, so kann die Brechzahl im darunter liegenden Bereich von n auf n + $\Delta$n bzw. im Bereich der benachbarten Prismenelektrode von n auf n - $\Delta$n geändert werden. Da jedoch die Kristallplatten eine Dicke von wenigstens 200 $\mu$m aufweisen und die benachbarten Elektroden unterschiedliche Polarität haben, ist die elektrische Feldverteilung zwischen den Elektroden sehr inhomogen - wie dies die in der Zeichnung eingetragenen Feldlinien verdeutlichen sollen. Diese inhomogene elektrische Feldverteilung hat die bereits erwähnten erheblichen Abweichungen bei der Brechzahlverteilung vom gewünschten idealen Verlauf zur Folge, was schließlich zu unerwünschten Verzerrungen des abgelenkten Lichtstrahles führt. Der gleichfalls bekannte Lichtstrahlablenker gem. Figur 5 hat zwar den Vorteil, daß hierbei das Licht in einem Schichtwellenleiter, d.h. in einer dünnen sich entlang der Oberfläche eines als Substratkörper dienenden Lithiumniobatkristalles erstreckenden Schicht geführt wird, und damit mit einer vergleichsweise niedrigeren Spannung an den Elektroden gearbeitet werden kann, allerdings sorgt auch hier in nachteiliger Weise die stark inhomogene elektrische Feldverteilung zwischen den auf der Wellenleiteroberfläche aufgetragenen keilförmig angeordneten Elektroden für Abweichungen vom gewünschten idealen sägezahnförmigen Verlauf der Brechzahlverteilung.

Hier schafft die Erfindung Abhilfe. Eine nahezu ideale sägezahnförmige Brechzahlverteilung wird durch die nachfolgend beschriebene Vorgehensweise erreicht. Es wird dabei davon ausgegangen, daß Lithiumniobat- und auch Lithiumtantalat- Kristalle Ferroelektrika sind, die eine spontane Polarisation ohne äußeres elektrisches Feld unterhalb einer bestimmten Temperatur, der Curietemperatur $T_C$, zeigen. Der elektrische Feldvektor $\vec{E}_S$ der spontanen Polarisation weist dabei in einem monodomänen Lithiumniobatkristall in die Richtung der +Z - Achse. Entlang dieser Achse ist auch der größte elektro-optische Koeffizient zu verzeichnen.

Die Erfindung nutzt nun die Tatsache aus, daß es möglich ist, zumindest in der Nähe der Kristalloberfläche aber auch durch die gesamte Dicke der Kristallplatte hindurch in einigen Kristallbereichen durch Inversion der durch den E-Feld-Vektor $\vec{E}_S$ bestimmten Polarisationsrichtung in Domänen mit entgegengesetzt vorliegender spontaner Polarisationsrichtung eine weitgehend einheitliche Polarisationsrichtung zu erzeugen. Dies gelingt z.B. auf einem +Z - Schnitt - Lithiumniobatkristall (eine Inversion ist auch auf einem -Z - Schnitt - Lithiumniobatkristall möglich) durch das Auftragen einer Titan - Schicht und anschließendes Aufheizen auf über 1000°C. Die Bereiche, in denen eine weitgehend einheitliche Polarisationsrichtung erzeugt werden soll, können dabei photolithographisch sehr genau als Dreiecke bzw. Prismen mit scharfen Kanten und Ecken ausgebildet werden. Wird dafür Sorge getragen, daß jeweils benachbarte dreieck- bzw. prismenförmige Bereiche eine entgegengesetzte Polarisationsrichtung aufweisen, so kann durch Anlegen einer elektrischen Spannung an eine entsprechend diesen Bereichen zugeordnete gemeinsame rechteckförmige Elektrode in den benachbarten dreieck- bzw. prismenförmigen Bereichen eine Brechzahländerung mit unterschiedlichen Vorzeichen (n + Δn bzw. n - Δn) induziert werden. Die Brechzahlverteilung ist in diesem Fall nahezu ideal sägezahnförmig.

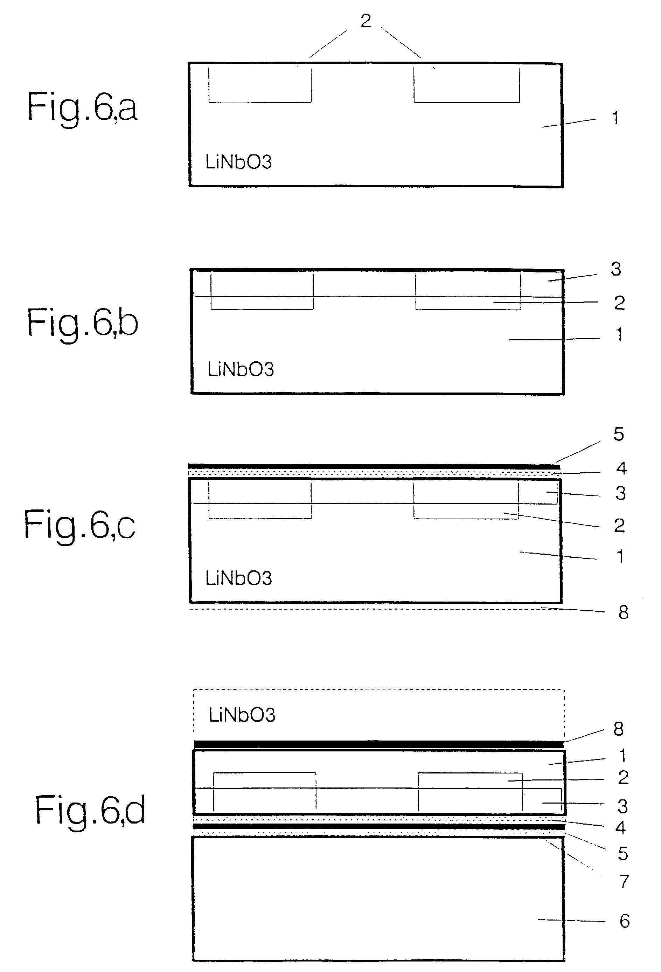

In den Figuren 6a bis 6d sind einzelne Verfahrensschritte zur Herstellung eines erfindungsgemäßen Lichtstrahlablenkers schematisch dargestellt.

Demnach wird zuerst auf der Oberfläche eines Z-Schnitt - Lithiumniobatkristalles 1 und zwar auf dessen Oberseite die vorerwähnte Dreiecks- bzw. Prismenstruktur erzeugt, indem zumindest in der Nähe der Oberfläche, d.h. 5 bis 10 μm tief, innerhalb dreieckförmiger Bereiche 2 durch Inversion der durch den E - Feld - Vektor $\vec{E}_S$ bestimmten Polarisationsrichtung in Domänen mit entgegengesetzt vorliegender spontaner Polarisationsrichtung eine weitgehend einheitliche Polarisationsrichtung erzeugt wird (Figur 6a).

Danach wird durch Protonenaustausch und anschließendes Tempern ein sich über die gesamte Oberseite des Lithiumniobatkristalles 1 erstreckender monomodiger Wellenleiter 3 hergestellt (Figur 6b).

In der Folge wird auf den Wellenleiter 3 eine dielektrische Schutzschicht 4, z.B. aus Siliziumdioxid, aufgedampft oder aufgesputtert. Auf die dielektrische Schutzschicht 4 wird sodann eine Metallschicht aufgetragen, aus der photolithographisch eine den dreieck- bzw. prismenförmigen Bereichen 2 zugeordnete gemeinsame rechteckförmige Metallelektrode 5 formiert wird (Figur 6c).

Der so vorbereitete Lithiumniobatkristall 1 wird anschließend gedreht, d.h. mit seiner Oberseite bzw. mit der Wellenleiterseite nach unten auf einen Träger 6 mit Hilfe eines Klebstoffes 7 aufgeklebt. Der Träger 6 kann ein Lithiumniobatkristall gleichen Schnittes sein oder aus Glas oder auch aus einem anderen Werkstoff bestehen. Nach dem Aufkleben wird der Lithiumniobatkristall 1 von der nun oben liegenden ursprünglichen Unterseite her auf eine Dicke von beispielsweise 20 bis 30 μm poliert. Auf der polierten Seite wird schließlich eine Metallschicht aufgetragen, aus der dann z.B. photolithographisch eine gemeinsame oder eine der Zahl der Prismenelektroden 5 gleiche Zahl den Prismenelektroden 5 gegenüberliegende und in ihrer Form diesen entsprechende Gegenelektroden 8 gebildet werden (Figur 6d).

Die Herstellung des Lichtstrahlablenkers kann aber auch mit dem in Figur 6c dargestellten Verfahrensschritt abgeschlossen werden. Das heißt, hierbei wird die Metallelektrode 8 direkt auf die Unterseite des Lithiumniobatkristalles 1 aufgetragen (wie dies in Figur 6c strichliert dargestellt ist). Die Realisierung einer nahezu idealen sägezahnförmigen Brechzahlverteilung wird auch in diesem Falle gewährleistet. Lediglich die Dicke des Lithiumniobatkristalles 1 kann dann 200 μm nicht unterschreiten, und es muß mit einer höheren Spannung zwischen den Elektroden 5, 8 gearbeitet werden.

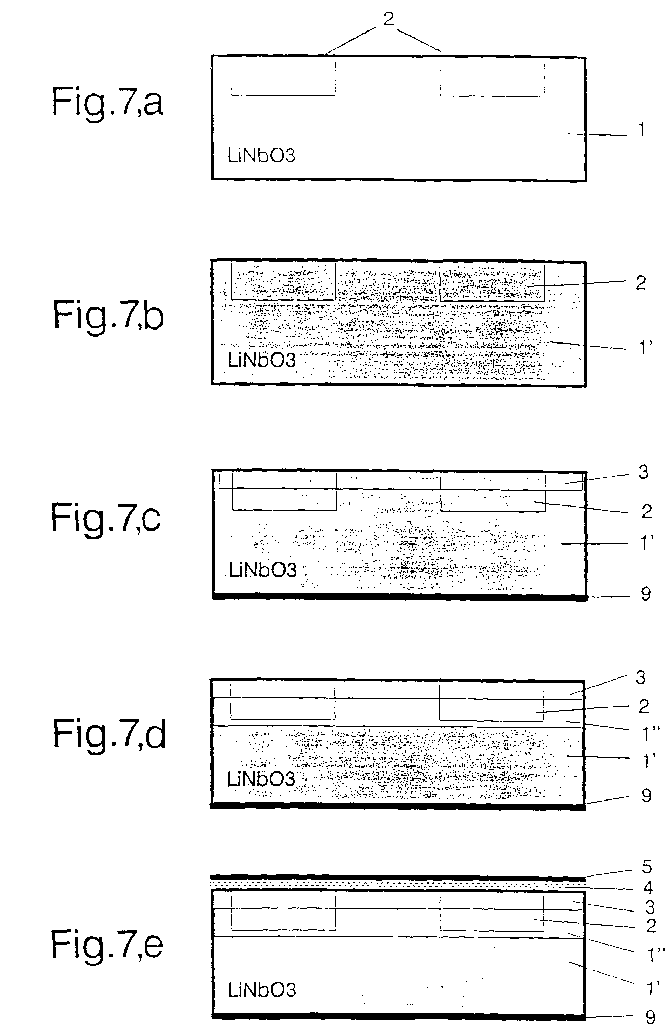

Die Figuren 7a bis 7e zeigen eine weitere Möglichkeit der Herstellung eines erfindungsgemäßen Lichtstrahlablenkers. Als Substratkörper dient wiederum ein Z - Schnitt - Lithiumniobatkristall 1. Auf der Oberseite dieses Lithiumniobatkristalles 1 wird zunächst wie beim anhand von Figur 6 erläuterten Herstellungsverfahren durch Inversion der spontan vorliegenden Polarisationsrichtung einiger Domänen innerhalb von auch hier mit 2 bezeichneten dreieck- bzw. prismenförmigen Bereichen eine überwiegend einheitliche Polarisationsrichtung und damit die gewünschte Dreieck- bzw. Prismenstruktur erzeugt (Figur 7a).

Abweichend vom vorstehend beschriebenen Verfahren wird nun aber in einem nächsten Verfahrensschritt Sauerstoff aus dem Lithiumniobatkristall 1 ausdiffundiert, mit der Absicht, einen elektrisch leiffähigen Kristall 1 zu erhalten (Figur 7b). Erreicht wird dies z.B. durch mehrstündiges Ausheizen des Lithiumniobatkristalles 1 im Vakuum bei etwa 400°C.

Auf die Sauerstoffausdiffusion folgt dann die Herstellung des Wellenleiters 3 durch Protonenaustausch mit anschließendem Tempern. Dabei wird die Unterseite des elektrisch leiffähigen Lithiumniobatkristalles 1' durch eine aufgetragene Metallschicht 9 von Sauerstoffzufuhr geschützt (Figur 7c).

In der Folge wird Sauerstoff dosiert eindiffundiert und zwar von der Oberseite her. Die Diffusionstiefe soll dabei nur einige μm (mehr als drei optische Wellenlängen) unter den Wellenleiter 3 reichen. Dieser Bereich, in dem der Lithiumniobatkristall wieder seine elektrische Leiffähigkeit verloren hat, ist mit 1" bezeichnet (Figur 7d).

Nach erfolgter Sauerstoffeindiffusion werden auf den Wellenleiter 3 nacheinander die dielektrische Schutzschicht 4 und darauf die Metallelektrode 5 aufgebracht (Figur 7e). Der mit 1' bezeichnete untere Bereich des als Substratkörper dienenden Lithiumniobatkristalles, in dem der ausdiffundierte Sauerstoff nicht ersetzt worden ist, bleibt elektrisch gut leitend und wird als Gegenelektrode benutzt.

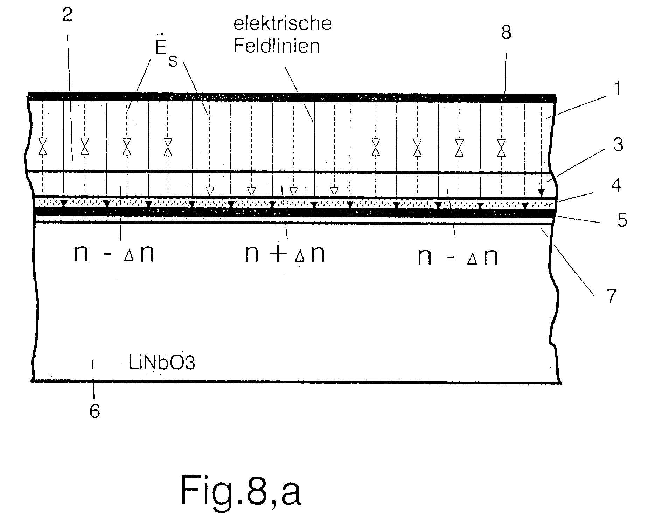

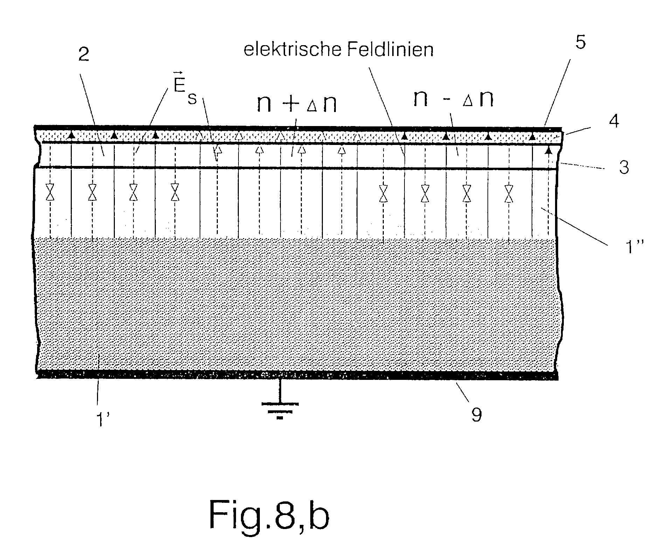

Während Figur 8a einen Querschnitt durch einen Lichtstrahlablenker zeigt, der nach der anhand der Figuren 6a bis d erläuterten Methode gefertigt wurde, ist in Figur 8b ein Querschnitt durch einen Lichtstrahlablenker dargestellt, wie er nach dem anhand der Figuren 7a bis e vorgestellten Verfahren hergestellt wurde. In beiden Darstellungen sind jeweils sowohl der Verlauf der Feldlinien des elektrischen Feldes bei einer angelegten Spannung zwischen den Elektroden 5 und 8 bzw. zwischen der Elektrode 5 und dem mit der Elektrode 9 verbundenen leiffähigen Bereich 1' des Substratkörpers als auch der Vektor $\vec{E}_S$ des elektrischen Feldes der spontanen Polarisation in den invertierten Bereichen eingezeichnet sowie die entsprechend im Wellenleiter 3 in diesen Bereichen induzierte Brechzahländerung n - Δn bzw. n + Δn bei einer an den Elektroden anliegenden Spannung angegeben.

Anstelle eines Lithiumniobatkristalles ist es möglich, einen Lithiumtantalatkristall als Substratkörper zu verwenden.

Ebensogut können statt der Metallelektroden 5 ITO - Schichten eingesetzt werden. Bei Verwendung dieser elektrisch leitfähigen transparenten Schichten ist die dielektrische Schutzschicht 4 entbehrlich.

Wird auf die Herstellung des Schichtwellenleiters 3 verzichtet und der Lichtstrahl im gesamten plattenförmigen Z-Schnitt-Lithiumniobat- oder Lithiumtantalatkristall 1 geführt, so müssen die dreieck- bzw. prismenförmigen Bereiche 2 durch die gesamte Dicke der Kristallplatte 1 hindurchreichen.

Mit den beschriebenen Herstellungsverfahren lassen sich in günstiger Weise an verschiedene Anwendungsfälle angepaßte Lichtstrahlablenker realisieren.

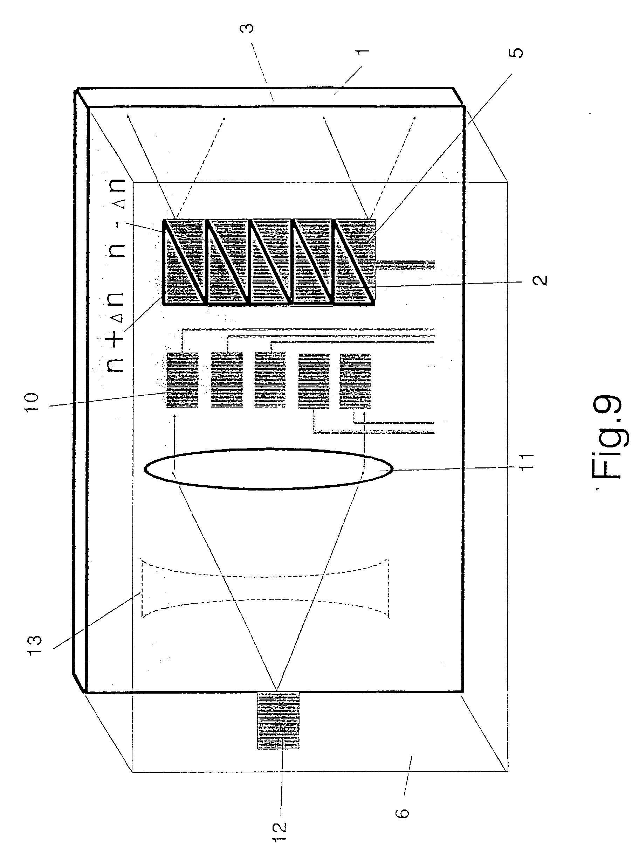

Figur 9 zeigt eine solche Realisierungsvariante. Hierbei sind auf dem als Substratkörper dienenden Z - Schnitt - Lithiumniobatkristall 1 nicht nur der sich über die gesamte Oberfläche erstreckende Schichtwellenleiter 3 und die Dreieck- bzw. Prismenstruktur mit dem eine weitgehend einheitliche Polarisationsrichtung aufweisenden Bereichen 2 und der dazugehörigen Prismenelektrode 5 (die Gegenelektroden sind nicht dargestellt) erzeugt, sondern derselbe Substratkörper trägt des weiteren fünf auf dem Schichtwellenleiter 3 angeordnete und den in diesem Fall fünf nebeneinander plazierten Prismenablenkern in Lichtausbreitungsrichtung vorgelagerte Steuerelektroden 10 sowie eine davor angeordnete Sammellinse 11. Während die Steuerelektroden 10 zum Zwecke der elektro - optischen Steuerung der Phase der mittels Prismenablenker abgelenkten Partialstrahlen vorgesehen sind, dient die Sammellinse 11, die als integriert - optisches Bauelement durch Protonenaustausch direkt auf dem Schichtwellenleiter 3 hergestellt werden kann, der Kollimierung des stark divergenten Lichtstrahles, welcher im Beispiel durch eine stirnseitig an den Wellenleiter 3 angekoppelte Laserdiode 12 erzeugt wird und der mit Hilfe des Lichtstrahlablenkers letztlich abgelenkt werden soll. Falls es notwendig ist, eine größere Apertur des kollimierten Lichtstrahles zu erreichen, kann auch eine integriert - optische Zerstreuungslinse 13 vorgeschaltet werden.

Anstelle der Direktankopplung der Laserdiode 12 ist es selbstverständlich auch möglich, das Licht mit Hilfe einer optischen Faser in den Wellenleiter 3 einzukoppeln.

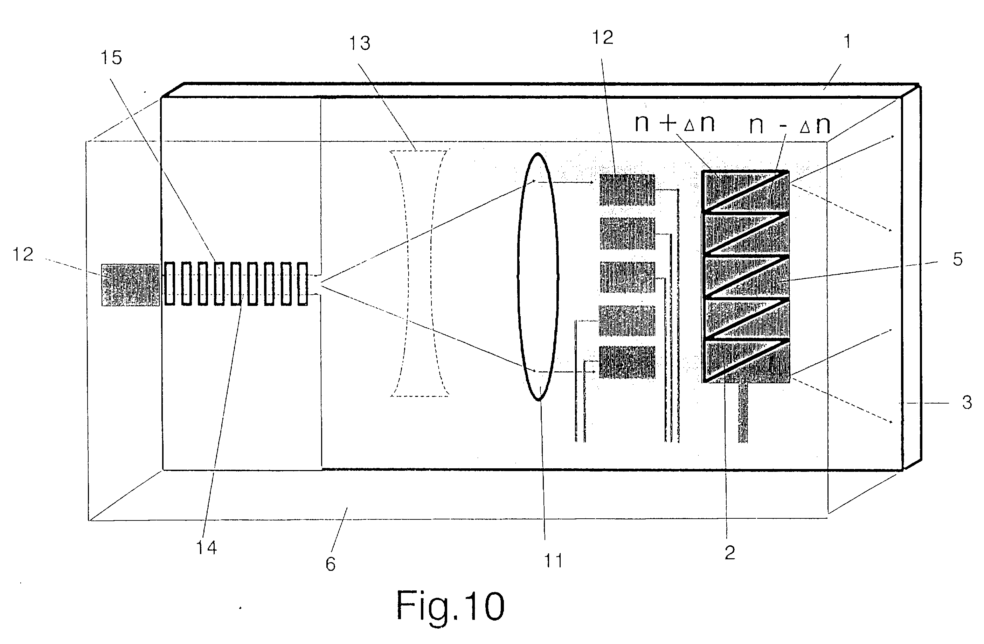

Eine Ausführungsform, die für den Einsatz in Systemen für optische Speicherung ganz besonders geeignet ist, zeigt Figur 10. Hierbei ist der Wellenleiter im vorderen der Lichteintrittseite zugewandten Bereich der Oberfläche des als Substratkörper dienenden Lithiumniobatkristalles 1 als Streifenwellenleiter 14 und erst im sich anschließenden, die Sammellinse 11, die Steuerelektroden 10 und die Prismenablenker 2, 5 aufweisenden Bereich als Schichtwellenleiter 3 ausgebildet. Der Streifenwellenleiter 14 ist dabei mit einer periodischen Gitterstruktur 15 versehen, indem dort in der gleichen Weise wie bei der Herstellung der prismenförmigen Bereiche 2 in der Nähe der Oberfläche des Lithiumniobatkristalles 1 innerhalb der einzelnen das Gitter bildenden Elemente durch Inversion der Polarisationsrichtung in Domänen mit entgegengesetzt vorliegender spontaner Polarisationsrichtung eine weitgehend einheitliche Polarisationsrichtung erzeugt ist, wobei jeweils benachbarte Gitterelemente eine entgegengesetzte Polarisationsrichtung aufweisen und die Periodizität so gewählt ist, daß eine Phasensynchronisierung für eine Frequenzverdopplung des im Streifenwellenleiter 14 geführten Lichtes gewährleistet ist. Dies bedeutet, daß bei Einspeisung von Licht mit einer Wellenlänge von zum Beispiel $0{,}8\,\mu m$ im Streifenwellenleiter 14 Licht mit einer Wellenlänge von $0{,}4\,\mu m$ erzeugt und dieses kurzwellige Licht sodann mittels Sammellinse 11 kollimiert und mit Hilfe der Prismenablenker 2, 5 abgelenkt wird.

Die Verwendung von kurzwelligem Licht hat insbesondere bei optischen Speicherplatten Bedeutung, da deren Beschichtungen für den kurzwelligen Bereich empfindlicher sind und im Vergleich zur Nutzung von langwelligem Licht eine erhebliche Steigerung der Schreibdichte erreicht werden kann.

Da es miniature kurzwellige Lichtquellen nicht gibt, eröffnet der vorstehend beschriebene Lichtstrahlablenker, der quasi in ein und demselben integriert - optischen Bauelement sowohl Mittel zur Lichtstrahlablenkung als auch zur Frequenzverdopplung vereint, die Möglichkeit, daß mit einer verhältnismäßig langwelligen, dafür aber miniaturen Laserdiode 12 gearbeitet werden kann und damit eine insgesamt sehr kleine Baugruppe zur Verfügung steht, die problemlos in einen Schreib - Lese - Kopf eines optischen Speicherplattengerätes eingebaut werden kann. Selbstverständlich ist es auch hier möglich, das Licht über eine Lichtleitfaser in den Streifenwellenleiter einzukoppeln.

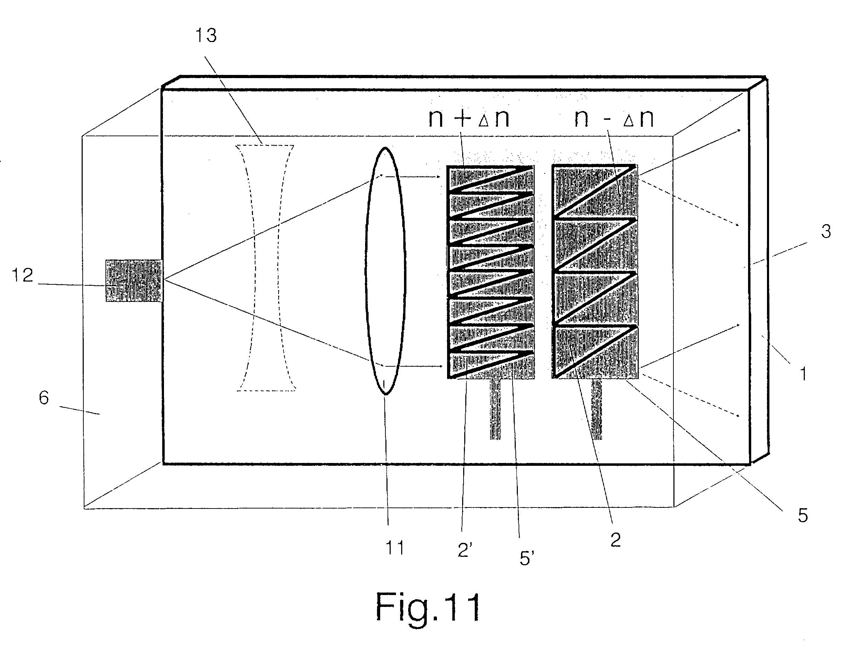

Die als integriert - optische Baugruppen ausgebildeten und sowohl Prismen- als auch Steuerelektroden 5 bzw. 10 aufweisenden Lichtstrahlablenker gemäß Figur 9 und 10 erlauben eine kontinuierliche Lichtstrahlablenkung. Für eine digitale Ablenkung sind die Steuerelektroden 10 entbehrlich. Allerdings ist für diesen Anwendungsfall die erreichbare Zahl an auflösbaren Punkten sehr begrenzt, wenn lediglich eine Zeile nebeneinander angeordneter Prismenablenker 2, 5 vorgesehen ist. Die Zahl der auflösbaren Punkte kann aber dadurch erhöht werden, daß im Bereich des Wellenleiters 3 zumindest eine weitere, der Prismenablenker - Zeile vorgelagerte zweite Zeile mit einer z.B. doppelten Anzahl Prismenablenkern 2', 5' vorgesehen wird. Figur 11 zeigt einen derartigen Lichtstrahlablenker, bei dem jedem von vier in einer Zeile nebeneinander plazierten Prismenablenkern 2, 5 zwei Prismenablenker 2', 5' vorgeschaltet sind, die gleichfalls alle in einer Reihe nebeneinander angeordnet und auf die gleiche Weise hergestellt sind.

Figur 12 zeigt schließlich einen Lichtstrahlablenker, der als schneller integriert-optischer Lichtschalter eingesetzt werden kann. Hierbei ist im Unterschied zum Lichtstrahlablenker nach Figur 9 auf dem Schichtwellenleiter 3 in Lichtausbreitungsrichtung den nebeneinander angeordneten Prismenablenkern 2, 5 nachgeordnet eine integriert-optische Linse 16 angeordnet, die das abgelenkte Licht fokussiert. Außerdem geht hierbei der Schichtwellenleiter 3 in der Fokusebene dieser Linse 16 in mehrere Lichtausgangskanäle bildende Streifenwellenleiter 17 über. Bei einer Betätigung dieses Lichtstrahlablenkers, d.h. beim Anlegen einer entsprechenden Spannung an die Elektrode 5, kann zwischen den verschiedenen Ausgangskanälen 17 geschaltet werden. Der Lichtstrahlablenker erlaubt eine sehr hohe Schaltgeschwindigkeit, sie kann 1 ns und weniger betragen.

**Patentansprüche**

1. Planarer elektro - optischer Lichtstrahlablenker mit einer Zeile von nebeneinander angeordneten Prismenablenkern, die mit einer elektrischen Spannung beaufschlagbare Elektroden aufweisen, wobei der Lichtstrahlablenker aus einem plattenförmigen Z-Schnitt-Lithiumniobat- oder Lithiumtantalatkristall (1) besteht, in dem der Lichtstrahl geführt ist, und die Prismenablenker aus jeweils zwei ein dreiseitiges Prisma bildenden Bereichen (2) bestehen, in denen durch Inversion der durch den E - Feld - Vektor bestimmten Polarisationsrichtung in Domänen mit ursprünglich in +Z-Achsenrichtung vorliegender spontaner Polarisationsrichtung eine weitgehend einheitliche Polarisationsrichtung erzeugt ist, wobei jeweils benachbarte prismenförmige Bereiche (2) eine entgegengesetzte Polarisationsrichtung aufweisen, und wobei auf dem Kristall (1) auf diesen prismenförmigen Bereichen (2) eine rechteckförmig ausgebildete Elektrode (5) aufgebracht ist und der Kristall (1) an seiner Unterseite mit zumindest einer Gegenelektrode versehen ist.

2. Planarer elektro - optischer Lichtstrahlablenker nach Anspruch 1, bei dem der Lichtstrahl in einem sich entlang der Oberfläche (Oberseite) des als Substratkörper dienenden Kristalles (1) erstreckenden, monomoden Schichtwellenleiter (3) geführt ist und die prismenförmigen Bereiche (2), in denen eine weitgehend einheitliche Polarisationsrichtung erzeugt ist, wenigstens die Dicke des Schichtwellenleiters (3) aufweisen.

3. Planarer elektro - optischer Lichtstrahlablenker nach Anspruch 2, bei dem der Kristall (1) unterhalb des Schichtwellenleiters (3) selbst elektrisch leiffähig gemacht ist und dieser Bereich als Gegenelektrode (8) dient.

4. Planarer elektro - optischer Lichtstrahlablenker nach einem der Ansprüche 1 bis 3, bei dem zwischen dem Kristall (1) und zwischen dem Schichtwellenleiter (3) und der Elektrode (5) eine dielektrische Schicht (4) angeordnet ist.

5. Planarer elektro - optischer Lichtstrahlablenker nach einem der Ansprüche 1 bis 4, bei dem auf dem Kristall (1) und dem Schichtwellenleiter (3) in Lichtausbreitungsrichtung den nebeneinander angeordneten Prismenablenkern (2, 5) vorgelagert eine entsprechende Zahl Steuerelektroden (10) plaziert sind.

6. Planarer elektro - optischer Lichtstrahlablenker nach einem der Ansprüche 2 bis 5, bei dem auf dem Schichtwellenleiter (3) zur Kollimierung des auf der Lichteintrittsseite eingekoppelten Lichtstrahles in Lichtausbreitungsrichtung vor den Prismenablenkern (2,5) eine integriert - optische Sammellinse (11) angeordnet ist.

7. Planarer elektro - optischer Lichtstrahlablenker nach Anspruch 6, bei dem auf dem Schichtwellenleiter (3) eine der Sammellinse (11) vorgelagerte integriert - optische Zerstreuungslinse (13) angeordnet ist.

8. Planarer elektro - optischer Lichtstrahlablenker nach einem der Ansprüche 2 bis 7, bei dem der Wellenleiter im vorderen,der Lichteintrittsseite zugewandten Bereich als Streifenwellenleiter (14) ausgebildet ist, der in den Schichtwellenleiter (3) übergeht, und bei dem der Streifenwellenleiter (14) mit einer periodischen Gitterstruktur (15) versehen ist, wobei die einzelnen Gitterelemente aus Bereichen bestehen, in denen durch Inversion der Polarisationsrichtung in Domänen mit entgegengesetzt vorliegender spontaner Polarisationsrichtung eine weitgehend einheitliche Polarisationsrichtung erzeugt ist, wobei jeweils benachbarte Gitterelemente eine entgegengesetzte Polarisationsrichtung aufweisen.

9. Planarer elektro - optischer Lichtstrahlablenker nach einem der vorhergehenden Ansprüche, bei dem zumindest zwei Zeilen nebeneinander angeordnete Prismenablenker (2, 5 und 2', 5') vorgesehen sind, wobei die einzelnen Zeilen (2', 5' und 2,5) in Lichtausbreitungsrichtung hintereinander angeordnet sind.

10. Planarer elektro - optischer Lichtstrahlablenker nach einem der Ansprüche 1 bis 9, bei dem der Kristall (1) mit der aufgebrachten Elektrode (5) nach unten auf einem Träger (6) aufgeklebt ist.

11. Planarer elektro - optischer Lichtstrahlablenker nach einem der Ansprüche 2 bis 10, bei dem an dem Wellenleiter (3, 14) eine Laserdiode (12) angekoppelt ist.

12. Planarer elektro - optischer Lichtstrahlablenker nach einem der Ansprüche 2 bis 11, bei dem auf dem Schichtwellenleiter (3) in Lichtausbreitungsrichtung den nebeneinander angeordneten Prismenablenkern (2, 5) nachgeordnet eine integriert-optische Sammellinse (16) angeordnet ist und bei dem in der Fokusebene dieser Sammellinse (16) der Schichtwellenleiter (3) in mehrere Lichtausgangskanäle bildende Streifenwellenleiter (17) übergeht.

13. Verfahren zur Herstellung eines planaren elektro-optischen Lichtstrahlablenkers mit einer Zeile von nebeneinander angeordneten Prismenablenkern,

bei dem zunächst in einem plattenförmigen Z-Schnitt-Lithiumniobat- oder Lithiumtantalat-Kristall (1) eine Prismenstruktur erzeugt wird, indem zumindest in der Nähe der Oberfläche (Oberseite) innerhalb jeweils ein dreiseitiges Prisma bildenden Bereichen (2) durch Inversion der Polarisationsrichtung in Domänen mit in +Z-Achsenrichtung vorliegender spontaner Polarisationsrichtung eine weitgehend einheitliche Polarisationsrichtung erzeugt wird, wobei benachbarte prismenförmige Bereiche (2) eine entgegengesetzte Polarisationsrichtung aufweisen, bei dem danach auf dem Kristall (1) auf diesen nebeneinander angeordneten prismenförmigen Bereichen (2) eine rechteckförmige Elektrode (5) aufgebracht wird und bei dem der Kristall (1) auf seiner Unterseite mit zumindest einer Gegenelektrode (8) versehen wird.

14. Verfahren nach Anspruch 13, bei dem nach dem Erzeugen der prismenförmigen Bereiche (2) auf der gesamten Oberfläche (Oberseite) des Kristalles (1) durch Protonenaustausch und Tempern ein monomodiger Wellenleiter (3) hergestellt wird und bei dem danach die rechteckförmige Elektrode (5) und die Gegenelektrode (8) aufgebracht werden.

15. Verfahren nach Anspruch 13 oder 14, bei dem nach dem Aufbringen der Elektrode (5) der Kristall (1) mit der Elektrodenseite nach unten auf einen Träger (6) aufgeklebt wird, danach der Kristall (1) von der Rückseite her auf eine vorgegebene Dicke herunterpoliert und auf der polierten Fläche die Gegenelektrode (8) aufgetragen wird.

16. Verfahren nach Anspruch 13, bei dem

nach dem Erzeugen der prismenförmigen Bereiche (2) aus dem Kristall (1) Sauerstoff ausdiffundiert wird, anschließend auf der Kristallunterseite eine Schutzschicht (9) aufgetragen wird, sodann auf der gesamten Oberfläche des Kristalles (1) durch Protonenaustausch und Tempern ein monomodiger Wellenleiter (3) hergestellt wird, danach dosiert Sauerstoff von dieser Oberfläche her eindiffundiert wird, bis die Diffusionstiefe einige $\mu m$ unter den Wellenleiter (3) reicht, und schließlich auf dieser Oberfläche den dreieckförmigen Bereichen (2) zugeordnet die rechteckförmige Elektrode (5) aufgebracht wird.

17. Verfahren nach einem der Ansprüche 13 bis 16, bei dem bei Verwendung eines Z - Schnitt - Lithiumniobatkristalles (1) die Inversion der Polarisationsrichtung durch Auftragen einer Titan-Schicht und anschließendes Aufheizen auf eine Temperatur größer 1000 °C erreicht wird, wobei die Dreiecksstruktur photolithographisch erzeugt wird.

18. Verfahren nach einem der Ansprüche 13 bis 17, bei dem die Elektrode (5) durch Aufbringen einer elektrisch leiffähigen Schicht und anschließendes photolithographisches Formieren hergestellt wird.

19. Verfahren nach einem der Ansprüche 14 bis 18, bei dem auf dem durch Protonenaustausch und Tempern hergestellten Wellenleiter (3) zunächst eine dielektrische Schutzschicht (4) erzeugt wird und darauf die Elektrode (5) aufgebracht wird.

20. Verfahren nach Anspruch 19, bei dem die dielektrische Schutzschicht (4) aufgedampft wird.

21. Verfahren nach Anspruch 19, bei dem

die dielektrische Schutzschicht (4) aufgesputtert wird.

## Claims

1. A planar electro-optical light beam deflector with a row of prism deflectors arranged alongside each other and which have electrodes to which an electrical voltage can be applied, wherein the light beam deflector consists of a plate-form Z-cut lithium niobate or lithium tantalate crystal (1), into which the light beam is passed, and the prism deflectors each consist of two regions (2) forming a three-sided prism, in which a largely unitary direction of polarisation is created by inversion of the polarisation directions determined by the E-field vector with a spontaneous polarisation direction originally present in the +Z-axis direction, wherein each adjacent prismatic region (2) has an opposite polarisation direction, and wherein a rectangular electrode (5) is applied on the crystal (1) on these prismatic regions (2) and the crystal (1) is provided on its underside with at least one counter-electrode.

2. A planar electro-optical light beam deflector according to claim 1, in which the light beam is passed into a single mode laminar waveguide (3) extending along the surface (upper side) of the crystal (1) serving as the substrate body and the prismatic regions (2) in which a largely uniform direction of polarisation is created have at least the thickness of the laminar waveguide (3).

3. A planar electro-optical light beam deflector according to claim 2, in which the crystal (1) is rendered electrically self-conductive beneath the laminar waveguide (3) and this region serves as a counter-electrode (8).

4. A planar electro-optical light beam deflector according to any of claims 1 to 3, in which a dielectric layer (4) is disposed between the crystal (1) and between the laminar waveguide (3) and the electrode (5).

5. A planar electro-optical light beam deflector according to any of claims 1 to 4, in which a corresponding number of control electrodes (10) are disposed on the crystal (1) and the laminar waveguide (3) ahead in the direction of propagation of light of the adjacent prism deflectors (2, 5).

6. A planar electro-optical light beam deflector according to any of claims 2 to 5, in which an integrated optical condensing lens (11) is disposed on the laminar waveguide (3) ahead in the direction of propagation of light of the prism deflectors (2, 5), in order to collimate the light beam coupled into the light input side.

7. A planar electro-optical light beam deflector according to claim 6, in which and integrated optical dispersing lens (13) is arranged on the laminar waveguide (3) ahead of the condensing lens (11).

8. A planar electro-optical light beam deflector according to any of claims 2 to 7, in which the waveguide is formed in the front region, facing the light input side, as a stripline (14), which transforms into the laminar waveguide (3), and in which the stripline (14) is provided with a periodic grating structure (15), wherein the individual grating elements consist of regions in which a largely uniform direction of polarisation is created by inversion of the polarisation direction in domains with opposite spontaneous direction of polarisation, wherein each adjoining grating element has an opposite direction of polarisation.

9. A planar electro-optical light beam deflector according to any of the preceding claims, in which at least two rows of adjacently arranged prismatic deflectors (2, 5 and 2', 5') are provided, wherein the individual rows (2', 5' and 2, 5) are arranged behind one another in the direction of propagation of light.

10. A planar electro-optical light beam deflector according to any of claims 1 to 9, in which the crystal (1) is bonded with the applied electrodes (5) down on to a carrier (6).

11. A planar electro-optical light beam deflector according to any of claims 2 to 10, in which a laser diode (12) is coupled to the waveguide (3, 14).

12. A planar electro-optical light beam deflector according to any of claims 2 to 11, in which an integrated optical condensing lens (16) is disposed ahead in the direction of propagation of light of the prismatic deflectors (2, 5) arranged alongside one another and the laminar waveguide (3) transforms in the focal plane of this condensing lens (16) into a plurality of striplines (17) forming light output channels.

13. A method of making a planar electro-optical light beam deflector with a row of prismatic deflectors arranged alongside one another, in which a prism structure is firstly created in a Z-cut lithium niobate or lithium tantalate crystal (1) of plate form, in which a largely uniform direction of polarisation is created by inversion of the direction of polarisation in domains with spontaneous direction of polarisation in the direction of the +Z axis, wherein adjacent prismatic regions (2) have opposite directions of polarisation, in which a rectangular electrode (5) is then applied to the crystal (1) on these adjacent prismatic regions (2)
and in which the crystal (1) is provided with at least
one counter-electrode (8) on its underside.

14. A method according to claim 13, in which a single
mode waveguide (3) is produced over the whole
surface (upper side) of the crystal (1) after creating
the prismatic regions (2), through proton exchange
and annealing, and in which the rectangular electrode (5) and the counter-electrode (8) are then applied.

15. A method according to claim 13 or 14, in which the
crystal (1) is bonded on to a substrate (6) with the
electrode side down, after application of the electrodes (5), after which the crystal (1) is polished
down from the rear side to a predetermined thickness and the counter-electrode (8) is applied on the
polished surface.

16. A method according to claim 13, in which oxygen is
diffused out of the crystal (1) after creating the prismatic regions (2),

    a protective layer (9) is then applied on the crystal underside,
    a single mode waveguide (3) is produced over
    the whole surface of the crystal (1) through proton exchange and annealing,
    metered oxygen is then diffused in from this
    surface, until the depth of diffusion reaches
    some μm below the waveguide (3), and
    finally the rectangular electrode (5) associated
    with the triangular regions (2) is applied on this
    surface.

17. A method according to any of claims 13 to 16, in
which the inversion of the direction of polarisation,
when using a Z-cut lithium niobate crystal (1) is created by application of a titanium layer and then heating to a temperature greater than 1000°C, wherein
the triangular structure is created photo-lithographically.

18. A method according to any of claims 13 to 17, in
which the electrode (5) is produced by applying an
electrically conductive layer and then shaping it
photo-lithographically.

19. A method according to any of claims 14 to 18, in
which firstly a dielectric protective layer (4) and then
the electrode (5) are applied on the waveguide produced by proton exchange and annealing.

20. A method according to claim 19, in which the dielectric protective layer (4) is vapour deposited.

21. A method according to claim 19, in which the dielectric protective layer (4) is sputtered.

**Revendications**

1. Déflecteur électro-optique planaire de faisceau lumineux,
comprenant :

   - une ligne de déflecteurs prismatiques juxtaposés, ayant des électrodes recevant une tension
    électrique,
   - le déflecteur de faisceau lumineux se compose
    d'un cristal de niobiate ou de tantalate de lithium à coupe en Z, en forme de plaque, conduisant le faisceau lumineux, et
   - les déflecteurs prismatiques se composent
    chaque fois de deux zones (2) formant un prisme à trois côtés, zones dans lesquelles, par inversion de la direction de polarisation définie
    par le vecteur champ électrique (E), dans des
    domaines ayant initialement une direction de
    polarisation spontanée dans la direction de
    l'axe +Z, on réalise une direction de polarisation largement uniforme,
   - chaque fois les zones prismatiques (2) voisines
    possèdent une direction de polarisation opposée, et
   - sur le cristal (1) et sur les zones prismatiques
    (2), on applique une électrode (5) de forme rectangulaire, la face inférieure du cristal (1) comportant au moins une contre-électrode.

2. Déflecteur électro-optique planaire de faisceau lumineux selon la revendication 1,
dans lequel

   - le faisceau lumineux est conduit dans un guide
    d'ondes en couche (3), monomode, s'étendant
    le long de la surface (côté supérieur) du cristal
    (1) servant de substrat, et
   - les zones prismatiques (2), dans lesquelles on
    génère une direction de polarisation largement
    uniforme, présentent au moins l'épaisseur du
    guide d'ondes en couche (3).

3. Déflecteur électro-optique planaire de faisceau lumineux selon la revendication 2,
dans lequel
le cristal (1) est lui-même rendu conducteur électrique en dessous du guide d'ondes en couche (3),
cette zone servant de contre-électrode (8).

4. Déflecteur électro-optique planaire de faisceau lumineux selon l'une des revendications 1 à 3,
dans lequel
entre le cristal (1) et le guide d'ondes en couche (3)
et l'électrode (5), on a une couche diélectrique (4).

5. Déflecteur électro-optique planaire de faisceau lumineux selon l'une des revendications 1 à 4, dans lequel
sur le cristal (1) et le guide d'ondes en couche (3), dans la direction de déploiement de la lumière, pour les déflecteurs à prismes (2, 5) juxtaposés, on a placé un nombre correspondant d'électrodes de commande (10).

6. Déflecteur électro-optique planaire de faisceau lumineux selon l'une quelconque des revendications 2 à 5, dans lequel
sur le guide d'ondes en couche (3), pour collimater le faisceau lumineux injecté du côté de l'entrée de la lumière, dans la direction de développement de la lumière, en amont des déflecteurs à prismes (2, 5), on a une lentille optique collectrice intégrée (11).

7. Déflecteur électro-optique planaire de faisceau lumineux selon la revendication 6 dans lequel
sur le guide d'ondes en couche (3) on a une lentille de dispersion optique intégrée (13) en amont de la lentille collectrice (11).

8. Déflecteur électro-optique planaire de faisceau lumineux selon l'une des revendications 2 à 7, dans lequel
le guide d'ondes, dans la zone avant tournée vers le côté d'entrée de la lumière, est réalisé comme un guide d'ondes en bande (14) qui devient le guide d'ondes en couche (3), et le guide d'ondes en bande (14) est muni d'une structure en réseau (15), périodique, les différents éléments de réseau étant formés par des zones dans lesquelles, par inversion de la direction de polarisation dans des domaines à direction de polarisation spontanée, opposée, on génère une direction de polarisation très largement uniforme, et les éléments de réseau voisins ont une direction de polarisation opposée.

9. Déflecteur électro-optique planaire de faisceau lumineux selon l'une des revendications précédentes, dans lequel
il est prévu au moins deux lignes de déflecteurs prismatiques juxtaposés (2, 5 et 2', 5'), les différentes lignes (2', 5' et 2, 5) étant placées les unes derrière les autres dans la direction de déploiement de la lumière.

10. Déflecteur électro-optique planaire de faisceau lumineux selon l'une des revendications 1 à 9, dans lequel
le cristal (1) est collé sur le support (6) avec son électrode (5) tournée vers le bas.

11. Déflecteur électro-optique planaire de faisceau lumineux selon l'une quelconque des revendications 2 à 10, dans lequel
une diode laser (12) est couplée sur le guide d'ondes (3, 14).

12. Déflecteur électro-optique planaire de faisceau lumineux selon l'une quelconque des revendications 2 à 11, dans lequel
sur le guide d'ondes en couche (3), dans la direction de déploiement de la lumière, à la suite des déflecteurs prismatiques (2, 5), juxtaposés, on a une lentille collectrice optique intégrée (16) et, dans le plan focal de cette lentille collectrice (16), le guide d'ondes en couche (3) rejoint plusieurs guides d'ondes en bande (17) formant des canaux de sortie de lumière.

13. Procédé de fabrication d'un déflecteur électro-optique planaire de faisceau lumineux comprenant une ligne de déflecteurs prismatiques juxtaposés, selon lequel
on réalise tout d'abord une structure prismatique dans un cristal de niobiate ou de tantalate de lithium à coupe en Z en forme de plaque (1) et, pour cela, au moins à proximité de la surface (côté supérieur) à l'intérieur chaque fois de deux zones (2) formant un prisme à trois côtés, par inversion de la direction de polarisation dans les domaines à direction de polarisation spontanée dans la direction de l'axe +Z, on génère une direction de polarisation largement uniforme, selon laquelle les zones prismatiques voisines (2) présentent une direction de polarisation opposée, et sur les zones prismatiques (2) juxtaposées sur le cristal, on applique une électrode (5) rectangulaire, le cristal (1) comportant au moins une contre-électrode (8) sur son côté inférieur.

14. Procédé selon la revendication 13, dans lequel,
après avoir réalisé les zones prismatiques (2) sur toute la surface (côté supérieur) du cristal (1), on réalise un guide d'ondes monomode (3) par échange de protons et traitement thermique, puis on applique l'électrode rectangulaire (5) et la contre-électrode (8).

15. Procédé selon la revendication 13 ou 14, dans lequel
après application de l'électrode (5), on colle le cristal (1) sur le support (6) par son côté électrode tourné vers le bas, puis on réduit le cristal (1) à une épaisseur prédéterminée en polissant sa face arrière, et l'on applique la contre-électrode (8) sur la face polie.

**16.** Procédé selon la revendication 13, dans lequel,

- après avoir réalisé les zones prismatiques (2), on extrait de l'oxygène du cristal (1) par diffusion,
- puis on applique une couche protectrice (9) sur la face inférieure du cristal,
- puis, sur toute la surface du cristal (1), on réalise un guide d'ondes monomode (3) par échange de protons et traitement thermique,
- puis on diffuse de l'oxygène de manière dosée à partir de cette surface, jusqu'à une profondeur de diffusion de quelques µm en dessous du guide d'ondes (3), et
- enfin, sur cette surface supérieure, on applique l'électrode rectangulaire (5) associée aux zones triangulaires (2).

**17.** Procédé selon l'une des revendications 13 à 16, dans lequel lorsqu'on utilise un cristal de niobiate de lithium (1) à coupe en Z, on inverse la direction de polarisation par application d'une couche de titane suivie d'un chauffage à une température supérieure à 1000°C pour générer, par un moyen photolithographique, la structure triangulaire.

**18.** Procédé selon l'une des revendications 13 à 17, caractérisé en ce qu' on réalise l'électrode (5) par application d'une couche conductrice électrique puis mise en forme par un moyen photolithographique.

**19.** Procédé selon l'une des revendications 14 à 18, dans lequel, sur le guide d'ondes (3) fabriqué par échange de protons et traitement thermique, on réalise tout d'abord une couche protectrice diélectrique (4) puis on applique l'électrode (5).

**20.** Procédé selon la revendication 19, dans lequel on réalise la couche protectrice diélectrique (4) par dépôt de vapeur.

**21.** Procédé selon la revendication 19, dans lequel on réalise la couche protectrice diélectrique (4) par pulvérisation.

elektro-optisches
Ablenkprisma

Lichtwelle

W

$n + \Delta n$

$\Delta \beta$

L

Fig.1

EP 0 712 505 B1

Lichtwelle

Fig.2

abgelenkte Partialwellen

Fig.3

Lichtwelle W

Steuerelektroden

Prismenelektroden

L

Gegenelektroden

a

LiNbO3

Fig.4

Fig.5

Steuerelektroden

Lichtwelle W

LiNbO3

L

a

Prismenelektroden

Schichtwellenleiter

EP 0 712 505 B1

Fig.6,a

Fig.6,b

Fig.6,c

Fig.6,d

Fig.7,a

Fig.7,b

Fig.7,c

Fig.7,d

Fig.7,e

EP 0 712 505 B1

2   $\vec{E}_s$   elektrische   8
                 Feldlinien

1

3

4

5

7

n - Δn        n + Δn        n - Δn

LiNbO3

6

# Fig.8,a

Fig.8,b

$$n + \Delta n \quad n - \Delta n$$

Fig.9

EP 0 712 505 B1

Fig.10

n + △n    n − △n

Fig.11

EP 0 712 505 B1

Fig. 12

EP 0 712 505 B1